# EUROPEAN PATENT APPLICATION

(11) **EP 4 579 183 A1**
(43) Date of publication of application: **02.07.2025**
(21) Application number: 23220888.4
(22) Date of filing: 31.12.2023
(51) Int. Cl.: G01C 15/00

(54) **LASER LEVELLING DEVICE WITH IMPROVED SHOCK PROTECTION**

(71) Applicant: Hilti Aktiengesellschaft, 9494 Schaan (LI)
(72) Inventor: Felsberger, Franz, 7000 Chur (CH)
(74) Representative: Hilti Aktiengesellschaft Corporate Intellectual Property

(57) **Abstract**

Laser leveling device, comprising a housing, a carrier frame mounted to the housing, a laser module holder mounted to the carrier frame, a laser module assembly disposed on the laser module holder and including at least one laser module configured to generate a laser line, an exit mounted to the housing and configured to allow the at least one laser line to exit the housing, and a damping device including a first inner damping element and a second inner damping element arranged between the carrier frame and the housing, wherein the first inner damping element and the second inner damping element define an inner protection area that encases the carrier frame in a length direction (LD) of the carrier frame.

## Description

The present invention relates to a laser levelling device with improved shock protection according to the definition of claim 1.

### Background of the invention

In a construction site, a laser levelling device irradiating a vertical laser line or a horizontal laser line, which is a criterion of a vertical degree and a horizontal degree of construction elements, such as pillars and walls, is used. The laser levelling device suspends a mechanism referred to as a gimbal mechanism or a gyro mechanism in a perpendicular orientation so as to always maintain a vertical position and supports a light source unit including a semiconductor laser. Most of the laser generating source of laser levelling devices are semiconductor lasers, such as laser diodes.

In the laser levelling device, a light source unit holder supporting the light source unit is swingable supported by the gimbal mechanism. The laser levelling device is required to accurately irradiate light of a vertical or horizontal direction line. For that reason, the gimbal mechanism desirably has a low friction resistance, and the light source unit holder is desired to be maintained in a predetermined vertical direction position.

Therefore, generally a bearing portion of the gimbal mechanism mainly composes a ball bearing and an axis rotatably supported thereby. However, since potentially the lowest friction resistance is selected for the ball bearing employed in the gimbal mechanism of the laser levelling device, a problem of impact resistance exists. Therefore, even in the case that the laser levelling device is erroneously dropped down during use, the bearing portion is damaged adversely affected due to impact resistance to increase the friction resistance such that the light source unit holder cannot hold the predetermined position, which thus causes a problem of deteriorated accuracy of the irradiated laser line.

US 7,418,786 B2 discloses a laser levelling device, which reduces damage to the gimbal mechanism even when it is used under sever conditions such as being dropped from a high location, and which is durable for subsequently continuous usage. The laser levelling device comprises a housing, a carrier frame formed as gimbal mechanism and mounted to the housing, a laser module holder mounted to the carrier frame, a laser module assembly disposed on the laser module holder and including at least one laser module configured to generate a laser line, an exit mounted to the housing and configured to allow the at least one laser line to exit the housing, and a damping device including a first inner damping element and a second inner damping element, the first and second inner damping elements being arranged between the carrier frame and the housing.

### Summary of the invention

Therefore, what is desired is a laser levelling device having improved shock protection.

These objectives are achieved by realizing the features of the independent claims. Features which further develop the invention in an advantageous manner are described in the dependent claims.

A laser levelling device according to the present invention comprises a housing, a carrier frame mounted to the housing, a laser module holder mounted to the carrier frame, a laser module assembly disposed on the optics carrier element and including at least one laser module configured to generate a laser line, an exit mounted to the housing and configured to allow the laser line to exit the housing, and a damping device including a first inner damping element and a second inner damping element, the first and second inner damping elements being mounted between the carrier frame and the housing. The laser levelling device is characterized in that the first inner damping element and the second inner damping element define an inner protection area that encases the carrier frame in a length direction of the carrier frame.

Preferably, the inner protection area encases the carrier frame in a plane perpendicular to the length direction.

Preferably, the first inner damping element and the second inner damping elements are made of a thermoplastic elastomer material.

Preferably, the laser levelling device further comprises a battery pack that is connectable to the housing.

Preferably, the laser levelling device further comprises a platform that is connected to the housing, wherein the housing is rotatable about an axis of rotation.

Preferably, the damping device further includes at least one outer damping element mounted to the exit.

Preferably, the laser module assembly includes a first laser module configured to generate a first laser line and a second laser module configured to generate a second laser line, preferably the first laser line being perpendicular to the second laser line.

Preferably, the laser module assembly further includes a third laser module configured to generate a third laser line, preferably the third laser line being perpendicular to the first laser line and second laser line.

Preferably, the exit includes a first exit configured to allow the first laser line to exit the housing, and/or a second exit configured to allow the second laser line to exit the housing, and/or a third exit configured to allow the third laser line to exit the housing, and the at least one outer damping element includes a first outer damping element mounted to the first exit, and/or a second outer damping element mounted to the second exit, and/or a third outer damping element mounted to the third exit.

Preferably, the first outer damping element, the second outer damping element, and the third outer damping element define an outer protection area that encases the laser module assembly.

Preferably, the first outer damping element, the second outer damping element, and the third outer damping element are made of a thermoplastic elastomer material.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: illustrates an exemplary embodiment of a laser levelling device in a perspective view,
- FIG. 2: illustrates the laser levelling device of FIG. 1 in a side cross-sectional view,
- FIG. 3: illustrates the laser module assembly, the carrier frame and the damping device of the laser levelling device 10 in a perspective view, and
- FIGS. 4A, B: illustrate the carrier frame of the laser levelling device enclosed by a first inner damping element and a second inner damping element in a first cross-sectional view (FIG. 4A) and in a second cross-sectional view (FIG. 4B).

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of", or, when used in the claims, "consisting of" will refer to the inclusion of exactly one element of a number or list of elements. In general, the term "or" as used herein shall only be interpreted as indicating exclusive alternatives (ke. "one or the other but not both") when preceded by terms of exclusivity, such as "either", "one of", "only one of", or "exactly one of", "consisting essentially of", when used in the claims, shall have its ordinary meaning as used in the field of patent law.

As used herein in the specification and in the claims, the phrase "at least one" in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

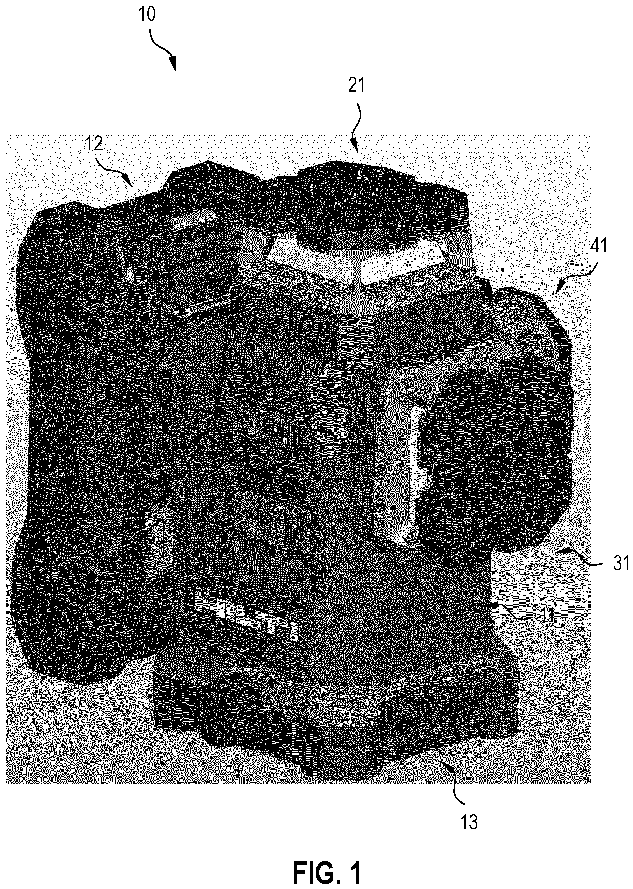

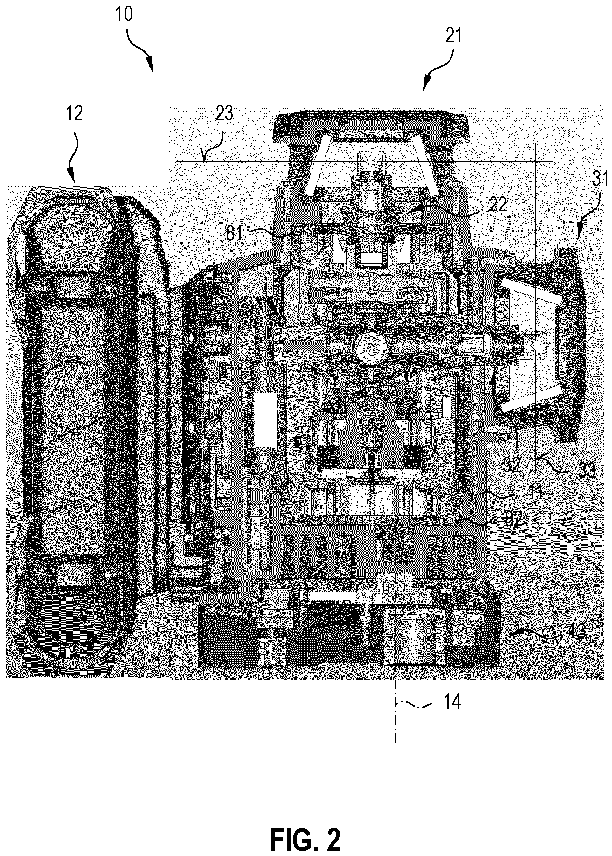

An exemplary embodiment according to the present application is shown in **FIGS. 1-4****.** With reference to FIGS. 1-2, there is illustrated an exemplary embodiment of a laser levelling device **10.** FIG. 1 is a perspective view of the laser levelling device 10, and FIG. 2 is a side cross-sectional view of the laser levelling device 10.

The laser levelling device 10 includes a housing **11** and a battery pack **12** that is removably attached to the housing 11 and powers the laser levelling device 10. The battery pack 12 may be a power tool battery pack which can also be coupled with power tools, such as drills, sanders, saws, etc., to provide power to those tools. The battery pack 12 houses a plurality of battery cells. The battery cells may be cylindrical lithium-ion battery cells or may have other battery chemistries or geometries.

The laser levelling device 10 includes a platform **13** that is connected to the housing 11. The platform 13 may be used as a rotating platform to allow the housing 11 to be rotated about an axis of rotation **14** that is substantially parallel to a vertical direction.

The laser levelling device 10 includes three projector portions **21, 31,** and **41,** which are called "first projector portion" 21, "second projector portion" 31, and "third projector portion" 41. The projectors portions 21, 31, 41 are protected openings through which laser modules extend so that the laser modules can project laser lines outside of the housing 11 onto an external surface.

At the first projector portion 21, a first laser module **22** can project a first laser line **23** out of the housing 11; the first laser line 23 is configured to define a horizontal plane, when the laser levelling device 10 is arranged in a horizontal set-up. At the second projector portion 31, a second laser module **32** can project a second laser line **33** out of the housing 11; the second laser line 33 is configured to define a first vertical plane, when the laser levelling device 10 is arranged in a horizontal set-up. At the third projector portion 41, a third laser module **42** can project a third laser line **43** out of the housing 11; the third laser line 43 is configured to define a second vertical plane, when the laser levelling device 10 is arranged in a horizontal set-up. As shown in FIG. 2, the first laser line 23, second laser line 33, and third laser line 43 are arranged perpendicular to each other.

FIG. 2 is a side cross-sectional view of the laser levelling device 10 and illustrates the composition of the laser levelling device 10 inside of the housing 11. The laser levelling device 10 includes a carrier frame, a laser module holder mounted to the carrier frame, a laser module assembly disposed on the laser module holder, and a damping device.

The laser levelling device 10 includes the laser module assembly that is housed in the housing 11 of the laser levelling device 10. In the exemplary embodiment of the laser levelling device 10, the laser module assembly includes the first laser module 22, the second laser module 32, and the third laser module 42. In case of a laser levelling device including only one projector portion or two projector portions, the laser module assembly would include only one laser module or two laser modules.

The first, second, and third laser module 22, 32, 42 are disposed on the laser module holder that is carried on the carrier frame. The carrier frame can be a pendulum assembly or any other type of gimbal assembly. Pendulum assemblies are typically used for self-levelling laser levelling devices and are well known in the art. The pendulum assembly rotates about a relatively small angle so that the first laser module 22 can project the first laser line 23 in the horizontal plane perpendicular to a local direction of gravity, and the second and third laser modules 32, 42 can project the second and third laser lines 33, 43 in the vertical planes parallel to the local direction of gravity. Additionally, the laser levelling device 10 can include a locking device to lock the pendulum assembly. In those instances, the pendulum assembly will be locked in a particular position rather than allowed to rotate under the influence of gravity and it may produce laser lines offset from the horizontal and vertical planes.

Each laser module includes a laser diode that serves as laser generating source, a collimating lens, and a conical member. The laser diode and the collimating lens of each laser module are held in a barrel that is generally cylindrically shaped. Other laser generating sources may be used to generate a laser beam.

The laser diode produces a laser beam that passes through and is collimated by the collimating lens, the collimated beam travels to the conical member, where it is reflected off of an outer surface of the conical member. The reflected beam forms the previously discussed first laser line 23, second laser line 33, and third laser line 43.

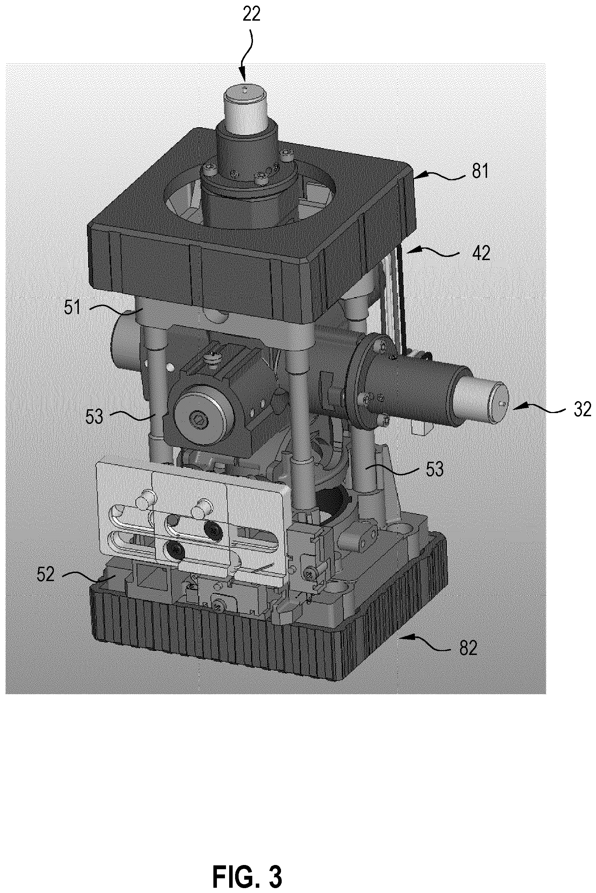

FIG. 3 illustrates the laser module assembly, the carrier frame, and the damping device of the laser levelling device 10 in a perspective view.

In the exemplary embodiment of the laser levelling device 10, the carrier frame is composed of a top plate **51,** a bottom plate **52** and four columns **53** connecting the top and bottom plates. As shown in FIG. 3, the carrier frame is protected by a first inner damping element **81** and a second inner damping element **82.**

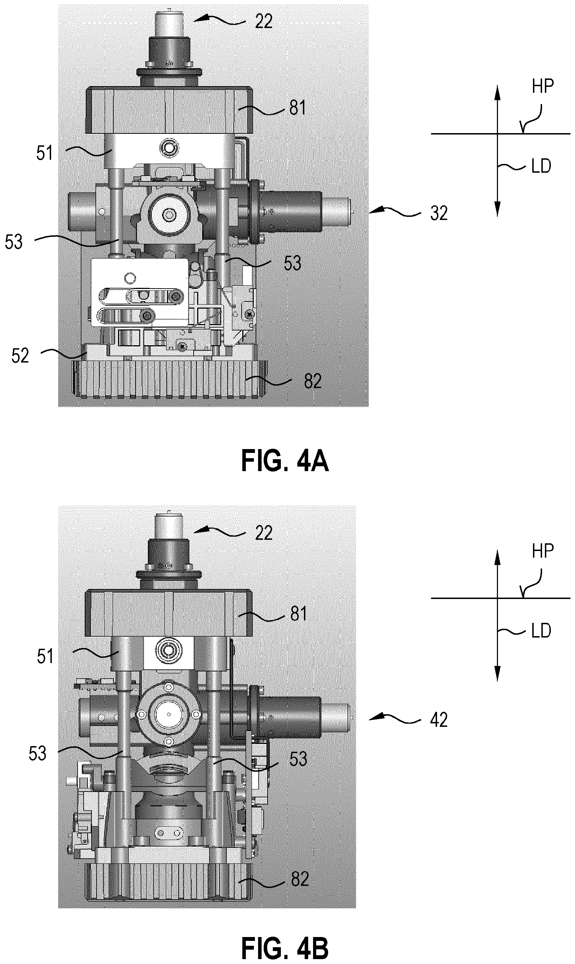

FIGS. 4A, B illustrate the carrier frame of the laser levelling device 10 enclosed by the first inner damping element 81 and the second inner damping element 82 in a first cross-sectional view (FIG. 4A) and in a second cross-sectional view (FIG. 4B).

## Claims

1. Laser leveling device (10), comprising:
▪ a housing (11),
▪ a carrier frame mounted to the housing (11),
▪ a laser module holder mounted to the carrier frame,
▪ a laser module assembly disposed on the laser module holder and including at least one laser module (22, 32, 42) configured to generate a laser line (23, 33, 43),
▪ an exit mounted to the housing (11) and configured to allow the at least one laser line (23, 33, 43) to exit the housing (11), and
▪ a damping device including a first inner damping element (81) and a second inner damping element (82), wherein the first and second inner damping elements being arranged between the carrier frame and the housing (11),
**characterized in that** the first inner damping element and the second inner damping element define an inner protection area that encases the carrier frame in a length direction (LD) of the carrier frame.

2. Laser leveling device according to claim 1, wherein the inner protection area encases the carrier frame in a plane (HP) perpendicular to the length direction (LD).

3. Laser leveling device according to any one of claim 1 to 2, wherein the first inner damping element and the second inner damping elements are made of a thermoplastic elastomer material.

4. Laser leveling device according to any one of claims 1 to 3, further comprising a battery pack (12) that is connectable to the housing (11).

5. Laser leveling device according to any one of claims 1 to 4, further comprising a platform (13) that is connected to the housing (11), wherein the housing (11) is rotatable about an axis of rotation (14).

6. Laser leveling device according to any one of claims 1 to 5, wherein the damping device further includes at least one outer damping element mounted to the exit.

7. Laser leveling device according to any one of claims 1 to 6, wherein the laser module assembly includes a first laser module (22) configured to generate a first laser line (23) and a second laser module (32) configured to generate a second laser line (33), preferably the first laser line (23) being perpendicular to the second laser line (33).

8. Laser leveling device of the claim 7, wherein the laser module assembly further includes a third laser module (42) configured to generate a third laser line (43), preferably the third laser line (43) being perpendicular to the first laser line (23) and second laser line (33).

9. Laser leveling device according to any one of claims 7 to 8, wherein the exit includes a first exit configured to allow the first laser line (23) to exit the housing (11), and/or a second exit configured to allow the second laser line (33) to exit the housing (11), and/or a third exit configured to allow the third laser line (43) to exit the housing (11), and the at least one outer damping element includes a first outer damping element mounted to the first exit, and/or a second outer damping element mounted to the second exit, and/or a third outer damping element mounted to the third exit.

10. Laser leveling device according to claim 9, wherein the first outer damping element, the second outer damping element, and the third outer damping element define an outer protection area that encases the laser module assembly.

11. Laser leveling device according to any one of claims 9 to 10, wherein the first outer damping element, the second outer damping element, and the third outer damping element are made of a thermoplastic elastomer material.
